# EUROPEAN PATENT SPECIFICATION

(11) **EP 4 144 212 B1**
(45) Date of publication and mention of the grant of the patent: **26.02.2025**
(21) Application number: 22197464.5
(22) Date of filing: 13.11.2018
(51) Int. Cl.: A01K 47/06, A01K 59/04, A01K 59/00, A01K 29/00, A01K 47/00, A01K 51/00

(54) **BEEHIVE DISINFECTION SYSTEM AND METHOD**
BIENENSTOCKDESINFEKTIONSANORDNUNG UND -VERFAHREN
SYSTÈME ET PROCÉDÉ DE DÉSINFECTION DE RUCHE

(30) Priority: 13.11.2017 US 201762584952 P
(43) Date of publication of application: 08.03.2023
(62) Divisional of application: 18876119.1
(73) Proprietor: Beewise Technologies Ltd., 2511500 Beit-Haemek (IL)
(72) Inventor: RADZYNER, Eliyah, Sunnyvale 94087, CA (US)
(74) Representative: Carangelo, Pierluigi

(56) References cited:
- CN-A- 105 519 456
- CN-A- 106 719 106
- DE-A1- 102013 006 265
- DE-U1- 202006 007 269
- IT-A1- UB20 159 742
- US-A- 4 520 519
- US-A- 4 573 228
- US-A- 5 685 762
- US-A1- 2012 202 403
- US-B1- 6 475 061

## Description

### TECHNICAL FIELD

The present disclosed subject matter relates to beehives. More particularly, the present disclosed subject matter relates to efficient automatic beehives, and specifically to systems and methods for detection and treatment or disinfection of a queen larva, a parasite, and/or the like at a single cell level.

Unless otherwise defined, all technical and scientific terms used herein have the same meaning as commonly understood by one of ordinary skill in the art to which this disclosed subject matter belongs. Although methods and materials similar or equivalent to those described herein can be used in the practice or testing of the present disclosed subject matter, suitable methods and materials are described below. In case of conflict, the specification, including definitions, will control. In addition, the materials, methods, and examples are illustrative only and not intended to be limiting.

### BACKGROUND OF THE INVENTION

Beekeeping has barely changed in the past 150 years and is still based on traditional labor-intensive work practices which have not been modernized. Inadequate beekeeping methods combined with new pests and diseases have put apiaries in the face of high annual colony loss rates associated with the *varroa* mite and Colony Collapse Disorder (CCD). Traditional work practices have become increasingly difficult and have had a strong negative effect on the profitability of beekeeping in the honey industry. An astonishing 70% of the honey sold at supermarkets as pure honey is not pure. This results from the lack of traceability in the honey production process.

The contribution of bees to agriculture is estimated at $160B a year. Since the 1990's the rate of increase in pollination-based agriculture has sharply increased, surpassing the average increase in the number of hives. This situation in addition to the recent colony loss crises has created a severe shortage in bees for pollination. This has a very strong effect on the pollination market. In the US prices for pollination services have tripled over the past 15 years.

US Pat. Pub. 4,520,519 discloses an apparatus for removing frames from honey supers comprising a lift mechanism adapted to receive a plurality of stacked supers and to raise the same to enable the uppermost super to be pushed laterally therefrom by means of a horizontally extending push-off arm. The frames are pushed upwardly from the super removed from the stack and are conveyed laterally into a scraping area wherein the wax is scraped from the top and bottom bars of the frames. The scraped frames are then moved laterally on the machine towards an operator who manually removes the scraped frames from the apparatus and delivers the same to a decapping machine. The operation is continuous so that successive supers are moved through the machine with the frames being removed therefrom and scraped.

### SUMMARY OF THE INVENTION

It is hence one object of the invention to disclose an automatic system that comprises: a plurality of honeycomb brood frames and other frames in the hive releasably mounted within at least one hive chamber; a mechanism for removing all kind of bee frames such as honeycomb or brood frames and other types of frames from said hive chamber, carrying bee frames into a monitoring and treatment chamber, and inserting said bee frames into said hive chamber; the monitoring and treatment chamber comprises: (A) a disinfector system provided with (i) a supporting board that is configured to move along the sides of the monitoring and disinfecting chamber so as to get distant and closer to the extracted frame and (ii) a disinfecting head that is provided with a pointing edge configured to physically puncture a cell in a bee frame, in case it is sealed, and to treat the cell by physical and/or chemical method, at a level of a single cell; and/or (B) a disinfector system provided on the other side of the extracted frame, provided with a disinfecting head that is mounted on an arm, preferably a robotic arm, that is configured to direct the disinfector head to a specific location opposite a specific cell that needs treatment, wherein the disinfecting head is provided with a pointing edge configured to physically puncture the cell, in case it is sealed, and to treat the cell by physical and/or chemical method, at a level of a single cell; or (C) a disinfecting system positioned between two adjacent frames, the disinfecting system being provided with a disinfecting head configured to move along a string from left to right and vice versa in order to be positioned in a correct positioning for disinfecting a specific cell, wherein the string is arranged to move up and down so that the whole surface of the frame is covered and can be reached by the disinfector head, wherein the disinfecting head is provided with two pointing edges on both sides so as to reach each one of the facing one another honeycomb cells; or (D) a disinfecting system positioned in a single spot in a disinfecting chamber opposite a bee frame, the disinfecting system being provided with a rotating head configured to direct a coherent ray such as laser to the specific cell that needs treatment and heat it in order to disinfect the cell; the automatic system further comprises: a light source for illumination of said bee frame; a high-resolution camera configured for capturing images of said bee frame to serve as raw data for image processing; and a CPU configured to: (i) determine, based on said image processing, if a specific cell of the plurality of cells in the bee frame needs to be treated by the disinfecting head as it contains a queen larva or is infected by a parasite, and (ii) direct the disinfecting head to the specific cell to disinfect or treat, at a single cell level, the specific cell.

Another object of the invention is to disclose an automatic beehive, comprising said automatic system and further comprising an automated honey harvesting arrangement; an arrangement for monitoring hive and bees conditions, analyzing obtained data and reporting results to a user; an arrangement for feeding bees, pest and climate control; and an AI-based decision making algorithm based on data gathered from the hives which employs a result of said image processing to alert a user, suggest and preform beekeeping practices within the automatic beehive in an automatic manner.

A further object of the invention is to disclose a method of beekeeping comprising: providing said automatic system; illuminating said bee frame by said light source; capturing an image of said bee frame with said high-resolution camera; determining, based on said image processing, by the computer processing unit, if a specific cell of the plurality of cells in the bee frame needs to be treated by the disinfecting head as containing an unwanted a queen larva or being infected by a parasite; and directing said disinfecting head to the specific cell to treat or disinfect at a single cell level, the specific cell.

### BRIEF DESCRIPTION OF THE DRAWINGS

Some embodiments of the disclosed subject matter described, by way of example only, with reference to the accompanying drawings. With specific reference now to the drawings in detail, it is stressed that the particulars shown are by way of example and for purposes of illustrative discussion of the preferred embodiments of the present disclosed subject matter only, and are presented in the cause of providing what is believed to be the most useful and readily understood description of the principles and conceptual aspects of the disclosed subject matter. In this regard, no attempt is made to show structural details of the disclosed subject matter in more detail than is necessary for a fundamental understanding of the disclosed subject matter, the description taken with the drawings making apparent to those skilled in the art how the several forms of the disclosed subject matter may be embodied in practice the art how the several forms of the disclosed subject matter may be embodied in practice.

In the drawings:
Figures 1a-1d illustrate an automatic unit of several beehives in several views and positions, in accordance with some exemplary embodiments of the disclosed subject matter;
Figure 2 illustrates several types of frames to be used in the unit shown in Figure 1a;
Figure 3 illustrates an interior view of an automatic beehive in accordance with an exemplary embodiment of the disclosed subject matter;
Figure 4 illustrates comb frame monitoring system in accordance with an exemplary embodiment of the disclosed subject matter;
Figure 5 illustrates comb frame monitoring system in accordance with an exemplary embodiment of the disclosed subject matter;
Figure 6 illustrates yet another comb frame monitoring system in accordance with an exemplary embodiment of the disclosed subject matter;
Figure 7 illustrates additional comb frame monitoring system in accordance with an exemplary embodiment of the disclosed subject matter;
Figure 8 illustrates yet additional comb frame monitoring system in accordance with an exemplary embodiment of the disclosed subject matter;
Figure 9 illustrates comb frame illumination system in accordance with an exemplary embodiment of the disclosed subject matter;
Figure 10a depicts an image of a honeycomb which is a mass of hexagonal prismatic wax cells built by honey bees in their nests to contain their larvae and stores of honey and pollen, on a comb frame onto which image processing was performed in accordance with an exemplary embodiment of the disclosed subject matter;
Figure 10b depicts another image of a honeycomb on a comb frame onto which image processing was performed in accordance with an exemplary embodiment of the disclosed subject matter;
Figure 11 illustrates a portion of a honeycomb provided with a disinfecting system in accordance with an exemplary embodiment of the disclosed subject matter;
Figure 12 illustrates an upper view of a monitoring and disinfecting chamber adjacent a beehive chamber in accordance with an exemplary embodiment of the disclosed subject matter;
Figure 13 illustrates an upper view of a disinfecting system in accordance with an exemplary embodiment of the disclosed subject matter;
Figure 14 illustrates an upper view of another disinfecting system in accordance with an exemplary embodiment of the disclosed subject matter;
Figure 15 is an isometric view of a unit of several beehives enclosure with a frame loader;
Figure 16 is an isometric enlarged view of a frame loader;
Figures 17a and 17b are external views of a unit of several beehives; and
Figures 18a and 18b are internal views of a unit of several beehives;

### DETAILED DESCRIPTION

Before explaining at least one embodiment of the disclosed subject matter in detail, it is to be understood that the disclosed subject matter is not limited in its application to the details of construction and the arrangement of the components set forth in the following description or illustrated in the drawings. The disclosed subject matter is capable of other embodiments or of being practiced or carried out in various ways. Also, it is to be understood that the phraseology and terminology employed herein is for the purpose of description and should not be regarded as limiting. The drawings are generally not to scale. For clarity, non-essential elements were omitted from some of the drawings.

A side-sliding configuration of hive chambers and frames (opposite to the standard top opening hives) allow for vertical stacking of hives and maximizing the amount of colonies served by the unit. The side-sliding extraction and insertion of frames, show-cased in the BeeWise prototype for monitoring, is to be further developed to allow for frames relocation, limited compatibility to standard (Langstroth) hives and other types, and include feeder, queen excluder and partition frames. This development will support the automation of vast majority of beekeeping actions and practices. It will also allow for easy migration of colonies between traditional and BeeHome platforms. The design objective is a box-frames system that includes all the different functioning frames in an unified automation-friendly form-factor, based of standard (Langstroth) frame size for limited compatibility. In order to achieve this, additional materials are to be examined for use that is not use in hive chambers traditionally (such as silicones, soft plastics and polymeric foams (existing hive chambers and frames implement wood, rigid plastics and metals).

An XYZ Cartesian robot is at the base of the system used to manipulate the different frames in the hive chamber. An additional 180 degrees rotary axis for two sided hive-array service and two sided visual monitoring is introduced. A combination of electric linear modules (belt and ball-screw driven) and pneumatic linear cylinders and grippers are used to achieve the best results considering the required precision, speed, force, durability, energetic efficiency and cost.

Custom designed end unit ('frame loader') to deliver considerable tolerance in positioning (to overcome the biological variability in the hives) and control the bees allocation while manipulating frames in the hives. All while keeping clear sight for visual monitoring and keeping honey and wax away from mechanical parts.

The data relating to the colonies is collected using a variety of off-the-shelf sensors. The key one being a high-resolution camera module chosen with suitable optics and lighting to produce the best images as raw data for image processing. The optical sensor is supplemented with load cell and in-hive environmental sensors (temperature, sound and humidity). RFID tagging of the frames is considered for more efficient data management in the system and improved storage and logistics management for the user. Environmental sensors are also implemented to track the conditions in the unit and outside to drive the climate control system and ensure proper conditions in the unit. The units systems (robot, feeding, solar-power etc.) are self-monitored using the relevant standard industrial sensors (such as inductive switches, liquid level switch, load cells, etc.)

The product contains off-the-shelf industrial level CPU and I/O controllers to perform the on-board computation, actions control and data acquisition.

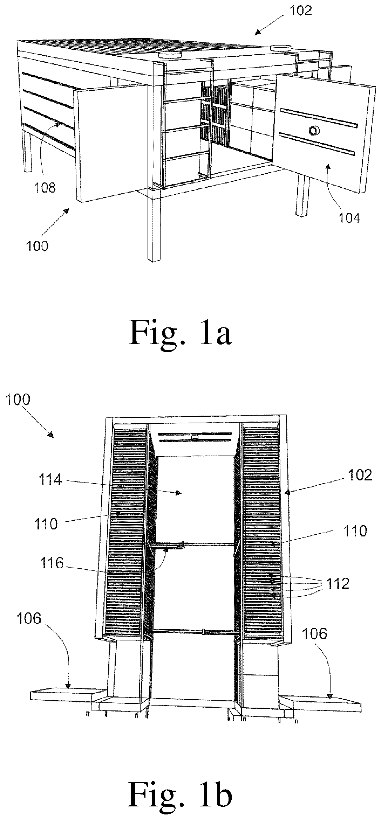

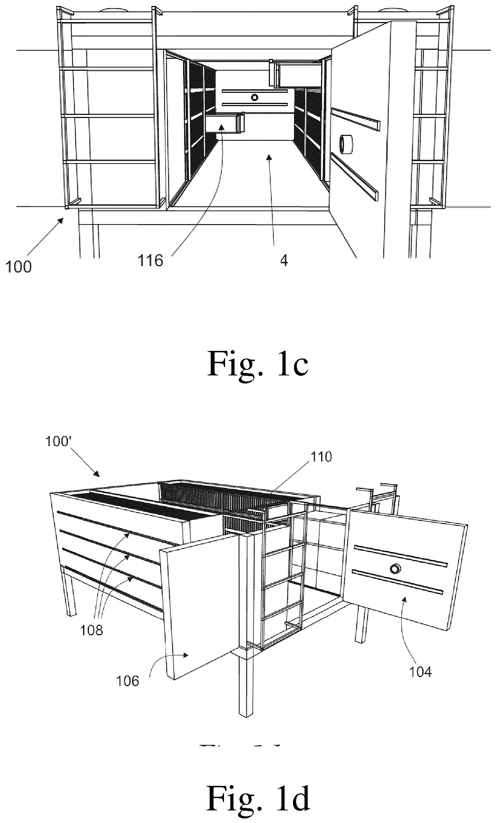

Reference is now to Figures 1a-1d illustrating an automatic unit of several beehives in several views and positions, in accordance with some exemplary embodiments of the disclosed subject matter. Automatic beehive 100 is an enclosure 102 provided with brood, super, and other chambers sized to fit the needs of the colony, as will be elaborated herein after. Beehive 100 has several openings for different purposes. At the front side, a main opening with a door 104 is provided so that a beekeeper or technician can reach the interior of the enclosure 102, while optionally, additional two service openings can be provided with doors 106 on the sides of the enclosure, in order to collect honey, honey combs, old/damaged frames, add new frames etc. Bee passage holes 108 are provided preferably to the sides of the enclosure, were the bees are intended to be accommodated. The holes 108 can be provided in different shapes, orientations, and sizes, without limiting the scope of the subject matter.

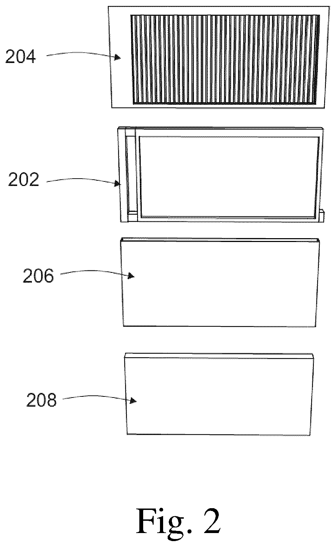

Figure 1b is a top view of the automatic unit of several beehives 100 while the roof of the enclosure is removed in order to be able to observe the interior order of the different chambers of the enclosure 102. The enclosure sides comprise horizontal rows of slots that can receive plurality of frames 112 depicted in figure 2. Alternatively, and optionally, several floors of frames can be organized one on top of the other as can be seen in Figure 1c. Each of the plurality of frames 112 can be removed from its slot and returned to it.

The frames are separated from one another allowing a gap of air between them so as 10 to allow space for the bees to be accommodated and build the honeycombs on the frames, usually about 4-9 mm between the frames should suffice for the bees.

Additionally, and preferably, the unit is provided with an air control system (not shown in the figures) that monitors characteristics or the beehive interior environment such as but not limited to temperature, humidity, allergens etc.

Additionally, and preferably, containers of sugar and water are provided on top of the beehive or in any other place suitable for it. Additionally, and preferably, the beehive is provided with wheels so it can be easily transported from one site to the other.

Reference is now made to Figure 2 illustrating several types of frames to be used in the unit of several beehives shown in Figure 1a. Most of the frames in the beehive are comb frames such as frame 202. Frame 202 is similar to a standard comb frame and is design to allow the bees to brood and build the honeycomb. It should be mentioned that each honeycomb comprises a plurality of hexagonal prismatic wax cells that are built by the community of honey bees in which their larvae and stores of honey and pollen are placed. The differentiation between the cells is crucial in the honey harvesting process, and monitoring the comb frames is needed in order to get as much information as needed.

Returning to Figures 1b and 1c, one can observe other chambers in the enclosure 102. Between the two rows of bee chambers 110, a monitoring and operating chamber 114 is provided in which at least one comb frame can be monitored so as to collect information. In order to monitor a frame of the plurality of frames, the frame to be examined 116 is removed from its place to the monitoring chamber 114 for inspection. The inspection can be performed by a variety of methods such as scanning, photographing, or any other method by which the surface of the honeycomb on the frame 116 is being imaged, after which image processing can optionally be employed in order to infer and differentiate the contents of the vast number of cells. In Figure 1c, one can see more than a single frame to be examined in extracted from its positioning into the monitoring chamber 114.

Since the frames can be automatically removed from their slots to be examined and treated, they can be harvested in case the image processing system results indicate that the frame is ready for harvesting. Honey can be collected from frames that are ready for harvesting.

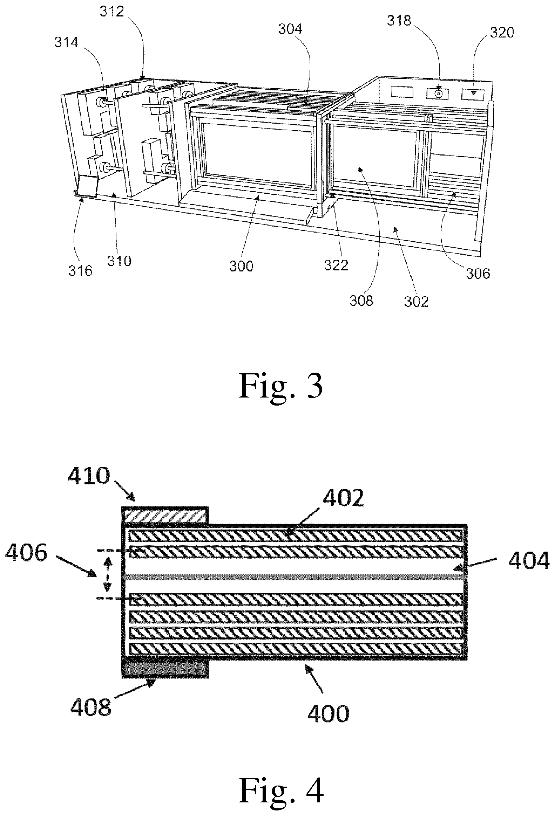

Reference is now made to Figure 3 illustrating a cut through a portion of the automatic beehive in accordance with some exemplary embodiments of the disclosed subject matter. A hive chamber 300 is situated adjacent to a monitoring chamber 302. The hive chamber 300 comprises a plurality of frames 304 that are vertically placed one near the other in a row, as shown herein before. Opposite the frames, in the monitoring chamber 302, a set of rails 306 is provided. The set of rails 306 is organized to form slots, wherein each of the slots is capable of receiving an oppositely positioned frame. It is illustrated in the figure that one comb frame 308 is extracted from the hive chamber 300 into the monitoring chamber 302 through a corresponding slot. The frame can be extracted and retracted back to its position using a displacement system.

In this embodiment, in figure 3, the displacement system is positioned in an actuating chamber 310 that is adjacent to the hive chamber 300 and comprises one or more motors 312 and pushing rods 314. Other displacement systems can be used without limiting the scope of the disclosed subject matter. Optionally, a controller 316 that is electrically connected and controls the engines and the rods movements is provided so as to ensure proper functioning of the system is provided. The controller 316 can be placed within the actuating chamber 310 or in any other part of the beehive as well as externally placed. It is also possible to use wireless connection between the controller and the displacement system.

The frame 308 in the monitoring chamber 302 is being monitored preferably using a camera 318 that is preferably attached to the side of the monitoring chamber 302 and is directed to image an oppositely positioned frame. The camera 318 can be any optical sensor that converts light into electrical signal such as photoconductive devices. In case light is necessary for the imaging process, illumination is provided. At least one illuminator 320 is provided adjacent to the camera 318. The illuminator can be LED, laser, or any other type of lighting. Information regarding the data processing will be explained hereinafter.

The frames 308 are extracted from the hive chamber 300, where the community of bees is working. In order to prevent withdrawal of the bees from the hive chamber while the comb frame is extracted, the exit area is provided with barriers 322 that can be a full surface or has brush like structure from both sides of the frame that prevents the bees from exiting the hive chamber. Returning to Figure 2, additional types of frames are provided. Queen excluder 204 is built according to the characteristics of the system, however, it accords the queen excluders that are provided in the art. In the same manner, a feeding frame 206 and a separator 208 are provided to separate between different sub-chambers of the bee chamber 110. Placement and displacement of separator 208 and queen excluder 204 allow varying the number of frames allocated for each colony in the unit, as well varying the size of the brood and honey chambers of each individual colony.

All types of frames are removable and can be extracted and retracted from their positioning from different reasons such as changes in the beehive structure and size, treatment of a unique frame, monitoring the comb frames, or any other maintenance action.

Monitoring the comb frames can be performed using several other embodiments as follows:
Reference is now made to Figure 4 illustrating comb frame monitoring system in accordance with some exemplary embodiments of the disclosed subject matter. An upper view of a portion of a hive chamber 400 is shown to be provided with several comb frames 402. A scanning or imaging device, an imager 404 is provided between the frames 402 so it can image the surface of the frame. In order to allow the imager 404 to be positioned between the frames 402, the two frames from both sides of the device should be moved apart so as to increase the gap 406 that normally exists between the frames.

Preferably, two actuators are provided. A first actuator 408 is provided so as to move the frames so as to allow the imager to have a sufficient gap between them and a second actuator 410 is provided so as to move the imager 404 from one gap to the other. Both actuators 408 and 410 can be positioned in any area of the chamber 400 or the beehive.

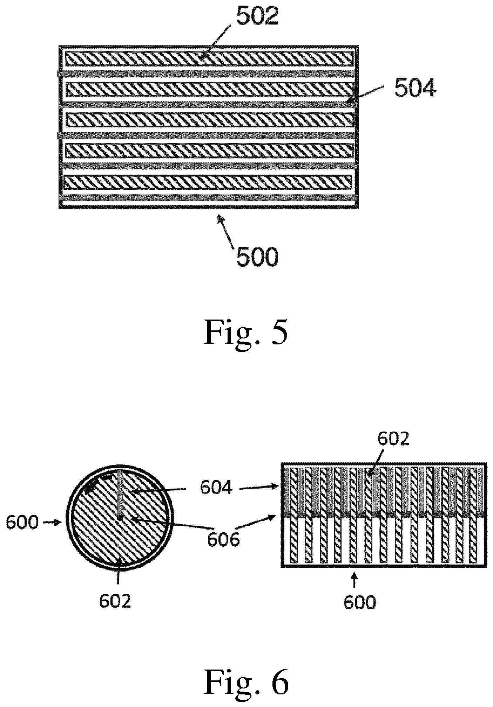

Reference is now made to Figure 5 illustrating another comb frame monitoring system in accordance with some exemplary embodiments of the disclosed subject matter. An upper view 5 of a portion of a hive chamber 500 is shown to be provided with several comb frames 502. A plurality of scanning or imaging device, each imager 504 is provided between two adjacent frames 402 so it can image the surface of the two frames that faces each other.

Reference is now made to Figure 6 illustrating yet another comb frame monitoring system in accordance with some exemplary embodiments of the disclosed subject matter. A side view (right hand side) and frontal view (left hand side) of a cylindrical hive chamber 600 is illustrated. Hive chamber 600 is built as a cylinder so that rounded comb frames 602 are arranged one beside the other. A plurality of imagers 604 is provided between each pair of adjacent frames while the imagers are rotating about an axis 606. In the frontal view, one can see that the imager 604 is a line imager that rotates according with the arrow and scans the full area of the frame 604.

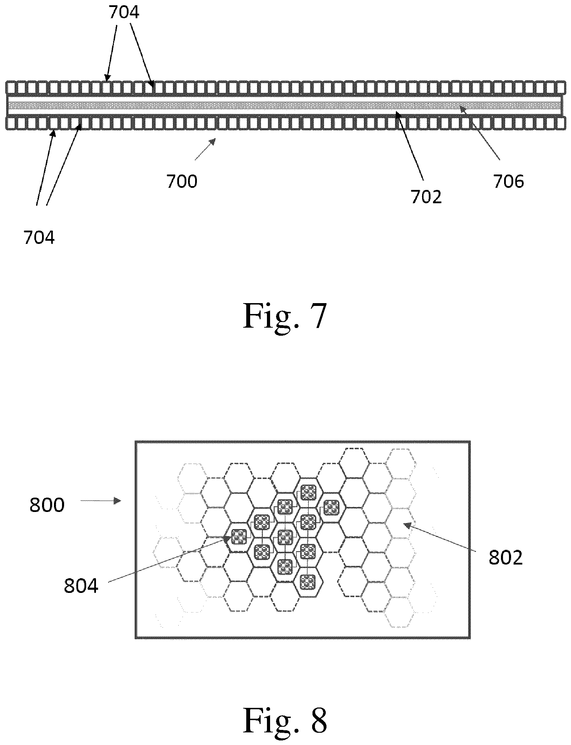

Reference is now made to Figure 7 illustrating additional comb frame monitoring system in accordance with some exemplary embodiments of the disclosed subject matter. A upper view of a single frame is shown in the figure. The comb frame 700 comprises a middle compartment 702 while on both opposite surfaces of the comb frame 700, cells of honeycomb 704 are built by the bees. Imager 706 is provided within the inner compartment 702 so that it can provide images of the honeycomb cells 704.

Reference is now made to Figure 8 illustrating yet additional comb frame monitoring system in accordance with some exemplary embodiments of the disclosed subject matter. A frontal view of a portion of a comb frame 800 is shown to have honeycomb cells 802 on its surface. Each cell 802 is provided with a miniature sensor 804 that images the interior of the cell and provides information on the cell content.

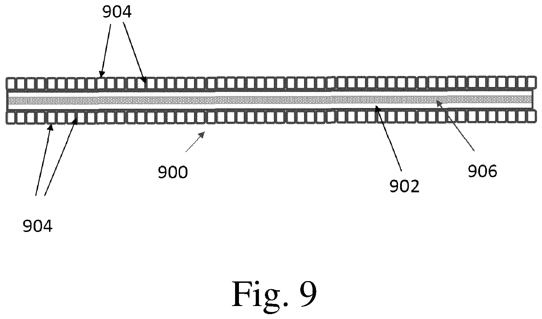

Reference is now made to Figure 9 illustrating comb frame illumination system in accordance with some exemplary embodiments of the disclosed subject matter. An upper view of a single frame is shown in the figure. The comb frame 900 comprises a middle compartment 902 while on both opposite surfaces of the comb frame 900, cells of honeycomb 904 are built by the bees. Illuminator 906 is provided within the inner compartment 902 so that it can provide improved image quality when an imager images the honeycomb. It should be mentioned that this type of inner illumination that is not producing heat within the frame can be used for any one of the previous illustrated imager embodiments. As mentioned herein before, in order to allow automatic beehives to function, data and information should be collected from the beehive so as to be able to provide treatment to the bees and the honey produced in the beehive. As indicated, monitoring the frames and the honeycomb cells is performed in or out of the hive chamber. Data is collected per cell as to the content of each cell, while bearing in mind that there are thousands of cells in a beehive. Each cell can be as followed: empty, contains bee stages in the phase of an egg, larvae, a sealed larvae, queen larvae and droon larvae or contains pollen, honey, or sealed honey. Integrating information regarding the cells contents, one can infer regarding the fertility of the queen, swarming, diseases, existence of parasites, a combination thereof and the like. Imaging of the surface of the honeycomb can provide vast amount of information.

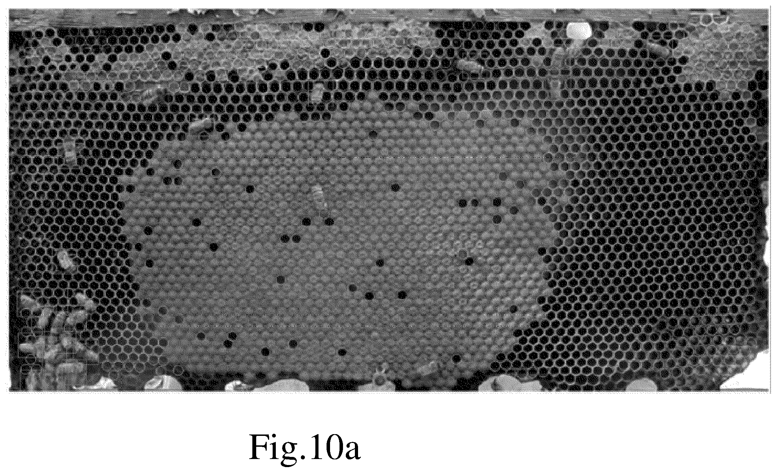

Reference is now made to Figure 10a depicting an image of a honeycomb on a comb frame onto which image processing was performed in accordance with some exemplary embodiments of the disclosed subject matter. The image comprises the differentiation between different types of cells in the honeycomb as well as showing were the bees are situated. As examples, sealed larvae cells are shown in pink circles, sealed honey cells that are ready to be harvested are shown in green circles, and bees are shown in blue squares. Image processing can also identify pests in the cells or on the honey comb surface such as the *Varroa Distractor* mite.

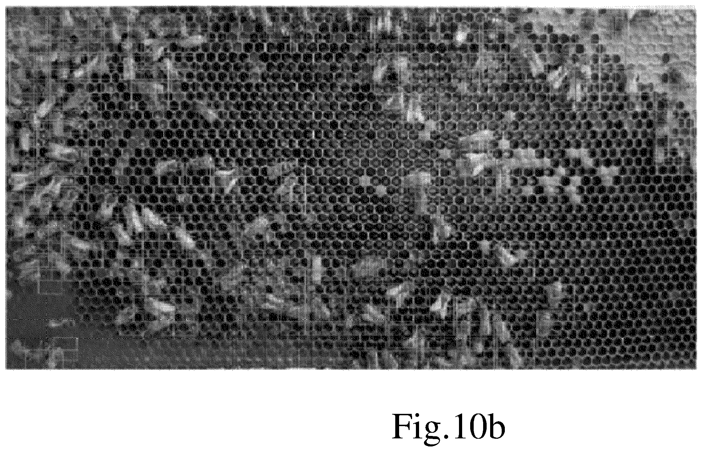

Reference is being made to Figure 10b depicting another image of a honeycomb on a comb frame onto which image processing was performed in accordance with some exemplary embodiments of the disclosed subject matter. In this image, only bees are detected and taken into account as data. Upon receiving the data from the imaging and processing systems, appropriate actions should be taken, if necessary, such as but not limited to disinfecting the honeycomb, removing frames, removing bees, imaging a specific frame as non-schedule action, harvesting honey, moving frames from one colony to the other, moving the queen excluder and the brier frame, feeding sugar syrup, heating or cooling the unit, applying pesticides, removing unwanted queen larvae cell, adding a queen, replacing a queen etc. The monitoring chamber can act also as a disinfecting and/or treatment chambers. It should be mentioned that the chambers can be separated or combined in any combination.

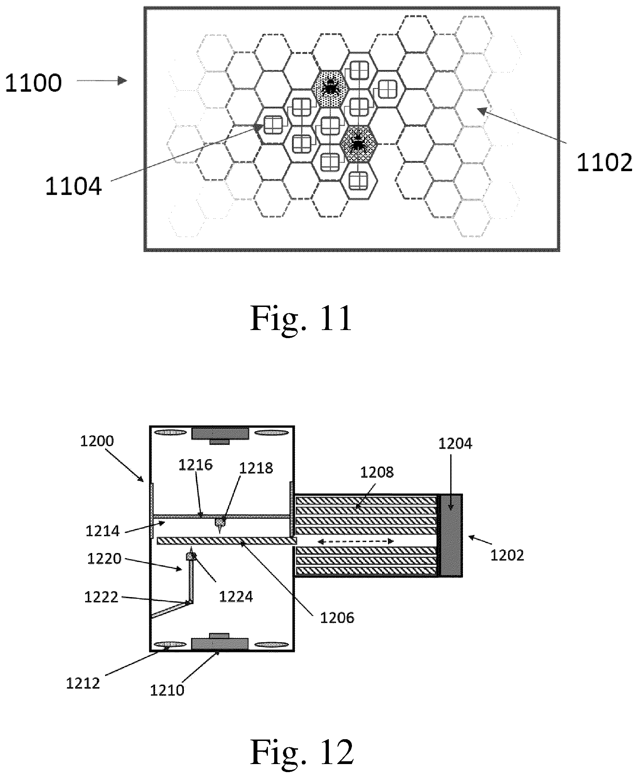

Reference is now made to Figure 11 illustrating a portion of a honeycomb provided with a disinfecting system in accordance with some exemplary embodiments of the disclosed subject matter. Each cell 1102 of the honeycomb 1100 is provided with a miniature heater 1104 while the heaters of all cells are electrically connected to a common controller (not shown in the figure) that is configured to control the heating of a specific or several cells if detected to be infected with a parasite that can be destroyed by applying sufficient heat. Reference is now made to Figure 12 illustrating an upper view of a monitoring and disinfecting chamber adjacent a hive chamber in accordance with some exemplary embodiments of the disclosed subject matter. A monitoring and disinfecting chamber 1200 is adjacent to a hive chamber 1202 of an automatic beehive. Actuating system 1204 is adjacent to the hive chamber 1202, wherein the actuating system is configured to push a single comb frame 1206 of the plurality of frames 1208 that are aligned in the hive chamber 1202 into the monitoring and disinfecting chamber 1200 at a time. The actuating system 1204 is configured to push the frame into the monitoring and infecting chamber in order to be examined or in order to be treated. As mentioned herein before, a monitoring chamber is preferably provided with at least one camera 1210 directed towards the extracted frame 1206 and illuminators 1212, also directed towards the extracted frame 1206. Since honeycombs are built on two surfaces of the frame, the camera and illuminators are provided on both sides of the chamber. The monitoring and disinfecting chamber 1200 is provided also with disinfecting means that are operated immediately after a detection of a parasite or other problem in a specific cell, or can be operated after all frames are imaged.

Figure 12 illustrates two types of disinfecting systems, operating on both sides of the frame 1206. Any combination of the systems or other such systems is possible without limiting the scope of the disclosed subject matter. Disinfector system 1214 is provided with a supporting board 1216 that is configures to move along the sides of the monitoring and disinfecting chamber 1200 so as to get distant and closer to the extracted frame 1206 and a disinfecting head 1218 that is provided with a pointing edge that can physically puncture the cell, in case it is sealed, and treat the cell through the pointing edge using optical or chemical means, a combination thereof and the like in order to treat a specific cell. On the other side of the extracted frame 1206, another disinfector system 1220 is provided. A disinfector head 1224 is mounted on an arm 1222, that can be a robotic arm, that directs the disinfector head 1224 to a specific location opposite a specific cell that needs treatment. The disinfector head is provided, similarly to the disinfector head 1218, with a pointing edge that can treat by physical or chemical methods, a combination thereof or the like, the honeycomb in the level of a single cell.

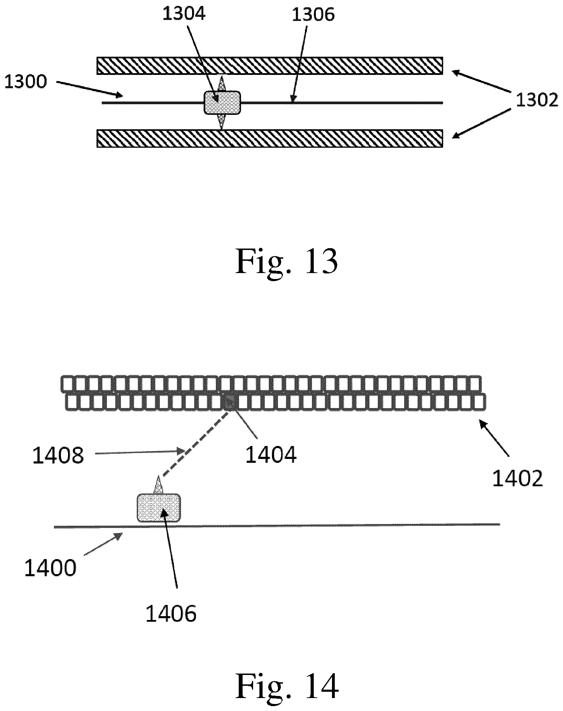

Reference is now made to Figure 13 illustrating an upper view of a disinfecting system in accordance with some exemplary embodiments of the disclosed subject matter. Disinfecting system 1300 is configured to be positioned between two adjacent frames 1302. A disinfecting head 1304 is moving along a string 1306 from left to right and vice versa in order to be positioned in the correct positioning for disinfecting a specific cell while the string can move up and down so the whole surface of the frame is covered and can be reached by the disinfector head. The disinfector head 1304 is provided with two pointing edges on both sides so as to reach each one of the facing one another honeycomb cells.

In this embodiment, the disinfecting system can be incorporated within an imager that is provided as well between the frames and was shown herein in Figures 5 or 6, as examples.

Reference is now made to Figure 14 illustrating an upper view of another disinfecting system in accordance with some exemplary embodiments of the disclosed subject matter. A disinfecting system 1400 is positioned in a single spot in a disinfecting chamber opposite a bee frame 1402. As already noted, the comb frame is provided with built up of honeycomb on the surface of the frame, on both sides. When a specific cell 1404 is detected to be infected, it has to be treated. Disinfecting system 1400 is provided with a rotating head 1406 that can direct a coherent ray such as laser 1408 to the specific cell 1404 that needs treatment and heat it in order to disinfect the cell. This disinfecting system can be employed in any adequate scanning or imaging systems and can also be mobile and positioned in any positioning in the monitoring and disinfecting chamber.

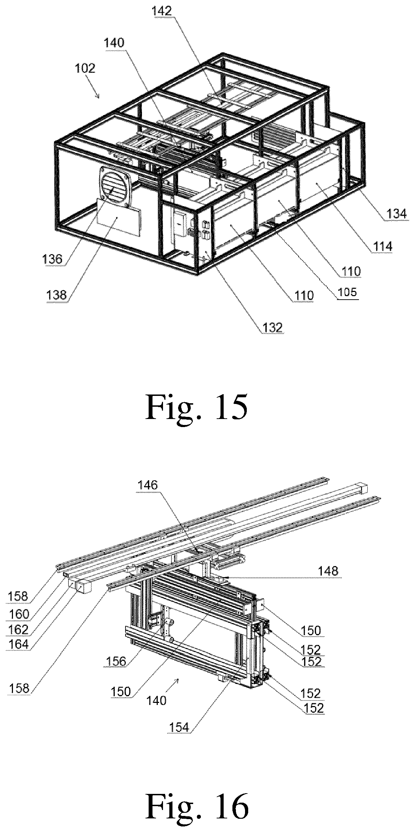

Reference is now made to Figure 15 presenting an internal isometric view of unit of one or several beehives enclosure 102. Frame loader 140 is displaceable along main axis 142 which is parallel to a face (not shown) of hive chambers 110. Numeral 136 refers to a vent creating an air flow into/out of the beehive. Camera 138 captures images of bee frames and transmits obtained images to control unit which is configured for analyzing them in terms of bees conditions, honey harvesting and pest control. The results of the carried out analysis are reported to a user. Camera 138 is provided with a light source for illumination of the bee frames during capturing their images.

Numeral 150 refers to an opening for the bees exiting or entering the hives, 105 The opening is divided into segments which can be either open or closed. Each segment of the opening has a bar running underneath the hive chamber which can be pushed or pulled by the cartesian robot, thus controlling whether the segment is open for the passage of bees or closed. Thus, the location and number of open and closed segments is controlled from within the unit by the cartesian robot or another mechanism.

Reference is now made to Figure 16 presenting an enlarged isometric view of the frame loader. A bee frame (not shown) is placeable into frame holder 140 which is displaceable along main axis rails 158 by stepper motor 164 by means of drag chain and linear drive belt 160 and 162, respectively. Frame loader 140 is connected to rails 158 via rotating table 146. The bee frame is movable along loader rails 152 via loader gate 154 and securable by gripper 156. Linear displacement along rails 152 is carried out by ball screw linear actuators 150.

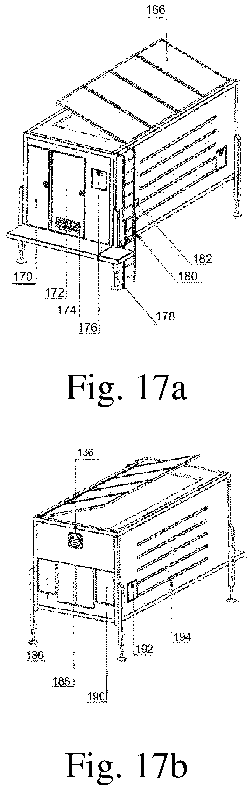

Reference is now made to Figures 17a and 17b presenting external views of the beehive. Specifically, a level of the beehive is adjustable by means support members 178. A honey tank access and a service door are indicated by numerals 170 and 172 respectively.

Service door 172 is provided with vent slits 174. Sugar loading is performed via port 176. Solar panel array is used as an alternative source of energy together with electric batteries 186. Water and pesticides are loaded via port 182. Numeral 180 refers to a service ladder. Opening and porches 194 are designed for landing bees and entering and exiting the hive.

The opening is divided into segments which can be either open or closed. Each segment of the opening has a bar running underneath the hive chamber which can be pushed or pulled by the cartesian robot, thus controlling whether the segment is open for the passage of bees or closed. Thus, the location and number of open and closed segments is controlled from within the unit by the Cartesian robot or another mechanism.

Tools cabin and interface chamber are indicated by numerals 190 and 192, respectively.

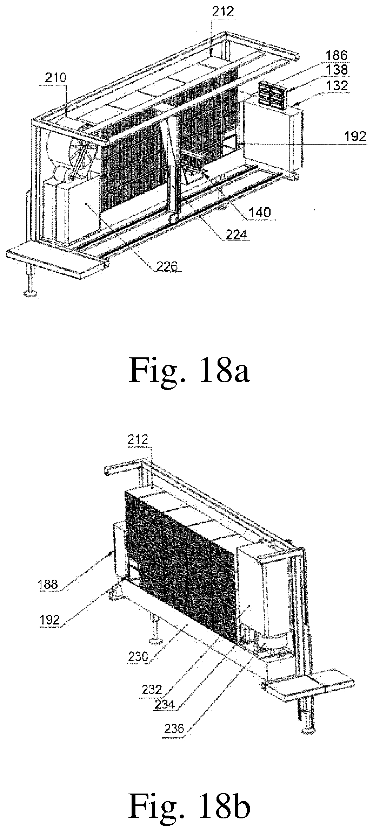

Reference is now made to Figures 18a and 18b presenting internal views of the beehive. Bee frames are stored in store 212. Honey harvested by centrifugal machine 210 is stored in honey tank 226. Frame loader 140 is two-axis displaceable by Cartesian XY robot 224. Tanks 230, 232 and 234 accommodate water, sugar and pesticides, respectively. The aforesaid materials are mixed in mixer 236.

It should be noticed that in all the embodiments shown herein as well as other possible embodiments, a control unit, which is seen in several of the embodiments, should be electrically connected to the systems such as the disinfecting system, monitoring system, actuation system, a combination thereof and the like. The control unit will coordinate the full functioning of the beehive so as to allow it to work in automatic manner.

The unit of several beehives in accordance with the disclosed subject matter can be a portable unit that can be transported from one place to another for purposes such as relocation and crop pollination. Another feature is a solar panel that can provide electricity to the systems of the beehive.

Although the invention has been described in conjunction with specific embodiments thereof, it is evident that many alternatives, modifications and variations will be apparent to those skilled in the art. Accordingly, it is intended to embrace all such alternatives, modifications and variations that fall within the broad scope of the appended claims. In addition, citation or identification of any reference in this application shall not be construed as an admission that such reference is available as prior art to the present invention.

## Claims

1. An automatic system including:
a plurality of bee frames (1208) releasably mounted within at least one hive chamber (1202);
a mechanism (1204) for extracting a bee frame (1206, 1302, 1402) from a hive chamber (1202) into a monitoring and treatment chamber (1200) and carrying a bee frame (1206, 1302, 1402) from the monitoring and treatment chamber (1200) into a hive chamber (1202);
**characterized by**:
the monitoring and treatment chamber (1200) comprising:
a disinfector system (1214) provided with a supporting board (1216) that is configured to move along the sides of the monitoring and disinfecting chamber (1200) so as to get distant and closer to the extracted frame (1206) and
a disinfecting head (1218) that is provided with a pointing edge configured to physically puncture a cell (802, 1102) in a bee frame (1206), in case it is sealed, and to treat the cell by physical and/or chemical method, at a level of a single cell;
and/or
a disinfector system (1220) provided on the other side of the extracted frame (1206), provided with
a disinfecting head (1224) that is mounted on an arm (1222), preferably a robotic arm, that is configured to direct the disinfector head (1224) to a specific location opposite a specific cell that needs treatment, wherein the disinfecting head (1224) is provided with a pointing edge configured to physically puncture the cell, in case it is sealed, and to treat the cell by physical and/or chemical method, at a level of a single cell;
or
a disinfecting system (1300) positioned between two adjacent frames (1302), the disinfecting system (1300) being provided with
a disinfecting head (1304) configured to move along a string (1306) from left to right and vice versa in order to be positioned in a correct positioning for disinfecting a specific cell, wherein the string is arranged to move up and down so that the whole surface of the frame is covered and can be reached by the disinfector head,
wherein the disinfecting head (1304) is provided with two pointing edges on both sides so as to reach each one of the facing one another honeycomb cells;
or
a disinfecting system (1400) positioned in a single spot in a disinfecting chamber opposite a bee frame (1402),
the disinfecting system (1400) being provided with a rotating head (1406) configured to direct a coherent ray such as laser (1408) to the specific cell (1404) that needs treatment and heat it in order to disinfect the cell;
and further **characterized by**:
a light source (1212) for illumination of said bee frame (1206);
a high-resolution camera (1210) configured for capturing images of said bee frame (1206) to serve as raw data for image processing; and
a Central Processing Unit configured to:
determine, based on said image processing, if a specific cell of the plurality of cells in the bee frame (1206) needs to be treated by the disinfecting head (1218, 1224, 1304, 1406) as it contains a queen larva or is infected by a parasite, and
direct the disinfecting head (1218, 1224, 1304, 1406) to the specific cell to disinfect or treat, at a single cell level, the specific cell.

2. An automatic beehive, comprising:
an automatic system according to claim 1;
an automated honey harvesting arrangement;
an arrangement for monitoring hive and bees conditions, analyzing obtained data and reporting results to a user;
an arrangement for feeding bees, pest and climate control; and
an AI-based decision making algorithm based on data gathered from the hives which employs a result of said image processing to alert a user, suggest and preform beekeeping practices within the automatic beehive in an automatic manner.

3. A method of beekeeping comprising:
providing an automatic system according to claim 1,
illuminating said bee frame (1206) by said light source (1212);
capturing an image of said bee frame (1206) with said high-resolution camera (1210);
determining, based on image processing by the computer processing unit, if a specific cell (802, 1102) of the plurality of cells in the bee frame (1206) needs to be treated by the disinfecting head (1218, 1224, 1304, 1406) as containing a queen larva or being infected by a parasite; and
directing said disinfecting head (1218, 1224, 1304, 1406) to the specific cell to treat or disinfect at a single cell level, the specific cell.

## Patentansprüche

1. Automatische Anordnung, die einschließt:
eine Vielzahl von Bienenrahmen (1208), die innerhalb mindestens einer Bienenstockkammer (1202) lösbar angebracht sind;
einen Mechanismus (1204) zum Entnehmen eines Bienenrahmens (1206, 1302, 1402) aus einer Bienenstockkammer (1202) in eine Überwachungs- und Behandlungskammer (1200) und zum Transportieren eines Bienenrahmens (1206, 1302, 1402) aus der Überwachungs- und Behandlungskammer (1200) in eine Bienenstockkammer (1202);
**gekennzeichnet durch**:
die Überwachungs- und Behandlungskammer (1200), umfassend:
eine Desinfektionsanordnung (1214), die mit einer Trägerplatte (1216) versehen ist, die so konfiguriert ist, dass sie sich entlang der Seiten der Überwachungs- und Desinfektionskammer (1200) bewegt, um sich vom entnommenen Rahmen (1206) zu entfernen und sich diesem anzunähern, und
einen Desinfektionskopf (1218), der mit einer spitzen Kante versehen ist, die so konfiguriert ist, dass sie eine Zelle (802, 1102) in einem Bienenrahmen (1206), falls diese versiegelt ist, physisch durchsticht und die Zelle **durch** ein physikalisches und/oder chemisches Verfahren auf der Ebene einer einzelnen Zelle behandelt; und/oder
eine Desinfektionsanordnung (1220), die auf der anderen Seite des entnommenen Rahmens (1206) vorgesehen ist, versehen mit
einem Desinfektionskopf (1224), der an einem Arm (1222), vorzugsweise einem Roboterarm, angebracht ist, der so konfiguriert ist, dass er den Desinfektionskopf (1224) auf eine bestimmte Stelle gegenüber einer bestimmten Zelle richtet, die eine Behandlung benötigt, wobei der Desinfektionskopf (1224) mit einer spitzen Kante versehen ist, die so konfiguriert ist, dass sie die Zelle, falls sie versiegelt ist, physisch durchsticht und die Zelle **durch** ein physikalisches und/oder chemisches Verfahren auf der Ebene einer einzelnen Zelle behandelt; oder
eine Desinfektionsanordnung (1300), die zwischen zwei benachbarten Rahmen (1302) positioniert ist, wobei die Desinfektionsanordnung (1300) versehen ist mit
einem Desinfektionskopf (1304), der so konfiguriert ist, dass er sich entlang einer Schnur (1306) von links nach rechts und umgekehrt bewegt, um in einer korrekten Position zum Desinfizieren einer bestimmten Zelle positioniert zu werden, wobei die Schnur so angeordnet ist, dass sie sich auf und ab bewegt, sodass die gesamte Fläche des Rahmens abgedeckt wird und vom Desinfektionskopf erreicht werden kann,
wobei der Desinfektionskopf (1304) beidseitig mit zwei spitzen Kanten versehen ist, um jeweils eine der einander zugewandten Honigwabenzellen zu erreichen; oder
eine Desinfektionsanordnung (1400), die an einer einzigen Stelle in einer Desinfektionskammer gegenüber einem Bienenrahmen (1402) positioniert ist,
wobei die Desinfektionsanordnung (1400) mit einem rotierenden Kopf (1406) versehen ist, der so konfiguriert ist, dass er einen kohärenten Strahl, beispielsweise einen Laser (1408), auf die bestimmte Zelle (1404) richtet, die eine Behandlung benötigt, und diese erhitzt, um die Zelle zu desinfizieren;
und ferner **gekennzeichnet durch**:
eine Lichtquelle (1212) zur Beleuchtung des Bienenrahmens (1206);
eine hochauflösende Kamera (1210), die zum Aufnehmen von Bildern des Bienenrahmens (1206) konfiguriert ist, um als Rohdaten für die Bildverarbeitung zu dienen; und
eine zentrale Verarbeitungseinheit, die konfiguriert ist zum:
Bestimmen, basierend auf der Bildverarbeitung, ob eine bestimmte Zelle der Vielzahl von Zellen im Bienenrahmen (1206) mit dem Desinfektionskopf (1218, 1224, 1304, 1406) behandelt werden muss, da sie eine Königinnenlarve enthält oder mit einem Parasiten infiziert ist, und
Richten des Desinfektionskopfes (1218, 1224, 1304, 1406) auf die bestimmte Zelle, um die bestimmte Zelle auf Einzelzellebene zu desinfizieren oder zu behandeln.

2. Automatischer Bienenstock, umfassend:
eine automatische Anordnung nach Anspruch 1;
eine automatisierte Honigernteeinrichtung;
eine Einrichtung zum Überwachen des Zustands des Bienenstocks und der Bienen, zum Analysieren der erhaltenen Daten und Melden von Ergebnissen an einen Benutzer;
eine Einrichtung zum Füttern von Bienen, zur Schädlings- und Klimakontrolle; und
einen KI-basierten Entscheidungsfindungsalgorithmus, basierend auf aus den Bienenstöcken gesammelten Daten, der ein Ergebnis der Bildverarbeitung nutzt, um einen Benutzer zu warnen, Bienenhaltungspraktiken vorzuschlagen und im automatischen Bienenstock auf automatische Weise durchzuführen.

3. Verfahren zur Bienenhaltung, umfassend:
Bereitstellen einer automatischen Anordnung nach Anspruch 1, Beleuchten des Bienenrahmens (1206) durch die Lichtquelle (1212);
Aufnehmen eines Bildes des Bienenrahmens (1206) mit der hochauflösenden Kamera (1210);
Bestimmen, basierend auf der Bildverarbeitung durch die Computerverarbeitungseinheit, ob eine bestimmte Zelle (802, 1102) der Vielzahl von Zellen im Bienenrahmen (1206) mit dem Desinfektionskopf (1218, 1224, 1304, 1406) behandelt werden muss, da sie eine Königinnenlarve enthält oder mit einem Parasiten infiziert ist; und
Richten des Desinfektionskopfes (1218, 1224, 1304, 1406) auf die bestimmte Zelle, um die bestimmte Zelle auf Einzelzellebene zu behandeln oder zu desinfizieren.

## Revendications

1. Système automatique comportant :
une pluralité de cadres de ruche (1208), montés de manière amovible à l'intérieur d'au moins une chambre de ruche (1202) ;
un mécanisme (1204) pour extraire un cadre de ruche (1206, 1302, 1402) d'une chambre de ruche (1202) dans une chambre de surveillance et de traitement (1200) et pour transporter un cadre de ruche (1206, 1302, 1402) de la chambre de surveillance et de traitement (1200) jusque dans une chambre de ruche (1202) ;
**caractérisé par :**
**le fait que** la chambre de surveillance et de traitement (1200) comprend :
un système de désinfection (1214) comportant une plaque de soutien (1216), conçue pour se déplacer le long des côtés de la chambre de surveillance et de désinfection (1200) afin de s'éloigner et de se rapprocher du cadre (1206) extrait et
une tête de désinfection (1218) comportant un bord pointu conçu pour percer physiquement une cellule (802, 1102) d'un cadre de ruche (1206), dans le cas où elle serait scellée, et pour traiter la cellule par un procédé physique et/ou chimique, au niveau d'une seule cellule ; et/ou
un système de désinfection (1220), situé de l'autre côté du cadre (1206) extrait et comportant
une tête de désinfection (1224) montée sur un bras (1222), de préférence sur un bras robotisé, conçu pour diriger la tête de désinfection (1224) jusqu'à un emplacement spécifique en face d'une cellule spécifique nécessitant un traitement, la tête de désinfection (1224) comportant un bord pointu conçu pour percer physiquement la cellule, dans le cas où elle serait scellée, et pour traiter la cellule par un procédé physique et/ou chimique, au niveau d'une seule cellule ; ou
un système de désinfection (1300) positionné entre deux cadres (1302) adjacents, le système de désinfection (1300) comportant
une tête de désinfection (1304), conçue pour se déplacer le long d'une chaîne (1306) de gauche à droite et vice versa, afin d'être bien positionnée pour désinfecter une cellule spécifique, la chaîne étant agencée pour se déplacer de haut en bas de sorte que toute la surface du cadre soit couverte et puisse être atteinte par la tête de désinfection,
la tête de désinfection (1304) comportant deux bords pointus des deux côtés, afin d'atteindre chacune des cellules en nid d'abeilles se faisant face ; ou
un système de désinfection (1400), positionné en un seul endroit dans une chambre de désinfection en face d'un cadre de ruche (1402),
le système de désinfection (1400) comportant une tête rotative (1406) conçue pour diriger un rayon cohérent tel qu'un laser (1408) jusqu'à la cellule spécifique (1404) nécessitant un traitement et pour la chauffer afin de désinfecter la cellule ;
et **caractérisé en outre par** :
une source lumineuse (1212) d'éclairage dudit cadre de ruche (1206) ;
une caméra haute résolution (1210), conçue pour capturer des images dudit cadre de ruche (1206) pour servir de données brutes pour le traitement d'images ; et
un processeur conçu :
pour déterminer, d'après ledit traitement d'images, si une cellule spécifique de la pluralité de cellules du cadre de ruche (1206) doit être traitée par la tête de désinfection (1218, 1224, 1304, 1406) car elle contient une larve de reine ou est infectée par un parasite et
pour diriger la tête de désinfection (1218, 1224, 1304, 1406) vers la cellule spécifique pour désinfecter ou pour traiter, au niveau d'une seule cellule, la cellule spécifique.

2. Ruche automatique, comprenant :
un système automatique selon la revendication 1 ;
un dispositif automatisé de récolte de miel ;
un dispositif permettant de surveiller l'état de la ruche et des abeilles, d'analyser les données obtenues et de communiquer les résultats à un utilisateur ;
un dispositif de nourrissement des abeilles, de lutte contre les parasites et de climatisation ; et
un algorithme de prise de décision basé sur l'IA et sur des données recueillies à partir des ruches, qui emploie un résultat dudit traitement d'images pour alerter un utilisateur, pour suggérer et pour effectuer des pratiques apicoles automatiques au sein de la ruche automatique.

3. Procédé d'apiculture comprenant :
l'utilisation d'un système automatique selon la revendication 1, pour éclairer ledit cadre de ruche (1206) par ladite source lumineuse (1212) ;
la capture d'une image dudit cadre de ruche (1206) par ladite caméra haute résolution (1210) ;
le fait de déterminer, d'après le traitement d'images par le processeur, si une cellule spécifique (802, 1102) de la pluralité de cellules du cadre de ruche (1206) doit être traitée par la tête de désinfection (1218, 1224, 1304, 1406) comme contenant une larve de reine ou étant infectée par un parasite ; et
le fait de diriger ladite tête de désinfection (1218, 1224, 1304, 1406) vers la cellule spécifique pour traiter ou pour désinfecter, au niveau d'une seule cellule, la cellule spécifique.
